# EUROPÄISCHE PATENTSCHRIFT

(11) **EP 2 445 605 B1**
(45) Veröffentlichungstag und Bekanntmachung des Hinweises auf die Patenterteilung: **22.03.2017**
(21) Anmeldenummer: 10725189.4
(22) Anmeldetag: 18.06.2010
(51) Int. Cl.: B01D 27/10, B01D 35/153, F01M 11/03

(54) **FILTEREINRICHTUNG**
FILTER DEVICE
DISPOSITIF DE FILTRATION

(30) Priorität: 24.06.2009 DE 102009030503
(43) Veröffentlichungstag der Anmeldung: 02.05.2012
(73) Patentinhaber: Mahle International GmbH, 70376 Stuttgart (DE)
(72) Erfinder: STIFEL, Marco, 70178 Stuttgart (DE); YUAN, Zhang, Shanghai 200127 (CN)
(74) Vertreter: BRP Renaud & Partner mbB Rechtsanwälte Patentanwälte Steuerberater
(86) Internationale Anmeldenummer: PCT/EP2010/058620
(87) Internationale Veröffentlichungsnummer: WO 2010/149584

(56) Entgegenhaltungen:
- EP-A1- 1 949 950
- WO-A1-2009/083285
- DE-A1- 19 951 085
- DE-A1-102008 036 055
- DE-U1-202007 002 162
- DE-U1-202009 002 455

## Beschreibung

Die vorliegende Erfindung betrifft eine Filtereinrichtung für Flüssigkeiten, insbesondere ein Ölfilter zum Reinigen von Schmieröl für Verbrennungsmotoren von Kraftfahrzeugen, mit den Merkmalen des Oberbegriffs des Anspruchs 1.

Filtereinrichtungen, insbesondere Ölfilter für Verbrennungsmotoren von Kraftfahrzeugen, besitzen üblicherweise ein so genanntes Ringfilterelement, mittels welchem eine die Filtereinrichtung durchströmende Flüssigkeit gefiltert wird. Turnusgemäß muss dieses Ringfilterelement ausgetauscht werden, um die Filterwirkung der Filtereinrichtung stets gewährleisten zu können. Das Ringfilterelement wird durch Abnahme einer Filtereinrichtung vom Gehäuse mit entfernt. Aufgrund der stetig steigenden Umweltauflagen muss dabei der Austausch des Ringfilterelementes möglich sein, ohne dass Flüssigkeit, insbesondere Öl, in die Umgebung gelangt. Aus diesem Grunde besitzen herkömmliche Filtereinrichtungen in ihrem Gehäuse neben einem Einlasskanal, der mit einer Rohseite des Ringfilterelementes kommuniziert und einem Auslasskanal der mit einer Reinseite des Ringfilterelementes kommuniziert, auch einen Leerlaufkanal, durch den ein Aufnahmeraum, in welchem das Ringfilterelement angeordnet ist, beim Abschrauben der Filtereinrichtung entleerbar ist. Selbstverständlich muss dieser Leerlaufkanal bei betriebsbereiter Filtereinrichtung verschlossen sein, da ansonsten die Reinseite und die Rohseite des Ringfilterelementes miteinander kurzgeschlossen werden würden und dadurch die Filtereinrichtung seine Filterwirkung nicht entfalten könnte.

Eine gattungsgemäße Filtereinrichtung ist aus der EP 1 949 950 A1 bekannt. Bei dieser bekannten Filtereinrichtung ist die Verschlusseinrichtung so mit der Kappe verrastet, dass die Verschlusseinrichtung in beiden Richtungen an der Kappe verdrehbar ist. Somit wird die Verschlusseinrichtung einerseits beim Anschrauben des Gehäuses verdreht bis zur Anlage des Verschlusselements am Leerlaufkanal und andererseits beim Abschrauben des Gehäuses verdreht bis zum Abheben des Verschlusselements vom Leerlaufkanal.

Eine andere Filtereinrichtung ist aus der DE 20 2007 002 162 U1 bekannt. Dort wird der Leerlaufkanal mittels eines Zapfens verschlossen, der fest mit dem Filterelement verbunden ist, so dass beim Herausziehen des Filterelements aus dem Gehäuse auch der Zapfen aus dem Leerlaufkanal herausgezogen und somit freigegeben wird.

Die vorliegende Erfindung beschäftigt sich mit dem Problem, für eine Filtereinrichtung eine verbesserte oder zumindest eine andere Ausführungsform anzugeben, welche ein automatisches Öffnen bzw. Verschließen eines Leerlaufkanales beim Aus- bzw. Einbau einer Filtereinrichtung ermöglicht.

Erfindungsgemäß wird dieses Problem durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, zwischen einer stehend angeordneten Filtereinrichtung und einem darunter angeordneten Gehäuse ein Zwischenstück vorzusehen, in welches eine Verschlusseinrichtung integriert ist. Die Verschlusseinrichtung ist dabei drehbar um die Filterachse des Ringfilterelementes ausgebildet, wobei das Ringfilterelement selbst in einem Aufnahmeraum angeordnet ist, welcher von einem Filtergehäusedeckel begrenzt ist. Gehäuseseitig sind ein Einlasskanal und ein Auslasskanal vorgesehen, wobei der Einlasskanal mit einer Rohseite des Ringfilterelementes und der Auslasskanal mit einer Reinseite des Ringfilterelementes kommuniziert. Ebenso in dem Gehäuse vorgesehen ist ein Leerlaufkanal, durch den der Aufnahmeraum beim Abschrauben der Filtereinrichtung entleerbar ist, so dass keine Filterflüssigkeit, insbesondere kein Öl, in die Umgebung gelangen kann. Die drehbar um die Filterachse angeordnete Verschlusseinrichtung weist ein Verschlusselement auf, mit welchem der Leerlaufkanal bei vollständig an das Gehäuse angeschraubter Filtereinrichtung ver schließbar ist. Generell ist die Verschlusseinrichtung so ausgebildet, dass sie beim Anschrauben der Filtereinrichtung am Gehäuse in einer genau definierten Lage fixiert ist, in der das Verschlusselement fluchtend zum Leerlaufkanal angeordnet und durch das Anschrauben der Filtereinrichtung in eine den Leerlaufkanal verschließende Stellung verstellbar ist. Im Unterschied dazu wird die Verschlusseinrichtung beim Abschrauben der Filtereinrichtung vom Gehäuse verdreht und gleichzeitig axial vom Gehäuse weg bewegt, so dass das Verschlusselement beim Abschrauben der Filtereinrichtung vom Gehäuse den Leerlaufkanal freigibt und ein Leerlaufen des das Ringfilterelement beinhaltenden Aufnahmeraums ermöglicht. Durch die erfindungsgemäße Verschlusseinrichtung, welche beispielsweise als kostengünstiges Kunststoffteil mit einem Verschlusselement aus einem anderen Kunststoff ausgebildet sein kann, ist es auf technisch einfachste Weise möglich, den Leerlaufkanal bei vollständig am Gehäuse angeschraubter Filtereinrichtung zuverlässig zu verschließen und dadurch eine einwandfreie Funktion der Filtereinrichtung zu gewährleisten, wobei bei einem Abschrauben der Filtereinrichtung vom Gehäuse der Leerlaufkanal automatisch geöffnet wird, so dass der Aufnahmeraum für das Ringfilterelement leer laufen kann und keine Filterflüssigkeit in die Umgebung gelangt. Ein separates Öffnen bzw. Schließen des Leerlaufkanals, verbunden mit der Möglichkeit dieses zu vergessen, kann durch die erfindungsgemäße Filtereinrichtung zuverlässig ausgeschlossen werden, wodurch sich der Wartungsvorgang deutlich sicherer und zudem montagefreundlicher gestalten lässt. Durch die während des Anschraubvorgangs der Filtereinrichtung am Gehäuse genau fixierte Lage der Verschlusseinrichtung kann darüber hinaus ein aufwändiges Positionieren bzw. Ausrichten des Verschlusselementes bezüglich des zu verschließenden Leerlaufkanals entfallen, wobei stets gewährleistet ist, dass der Leerlaufkanal bei vollständig am Gehäuse angeschraubter Filtereinrichtung zuverlässig verschlossen ist.

Erfindungsgemäß weist die Verschlusseinrichtung, die als Platte ausgebildet ist, mindestens eine dem zum Gehäuse gehörenden Dom zugewandte Rippe auf, die beim Anschrauben der Filtereinrichtung an die mindestens eine gehäuseseitige Rampe anliegt und dadurch bezüglich seiner Lage so fixiert ist, dass das Verschlusselement zum Leerlaufkanal fluchtet und durch ein weiteres Anschrauben der Filtereinrichtung in seine den Leerlaufkanal verschließende Stellung verstellbar ist. Die Rippe gewährleistet dabei beim Anschrauben, dass die Rippe mit einem Anschlag, den die gehäuseseitige Rampe bildet, in Kontakt steht und somit die Verschlusseinrichtung an einer weiteren Drehbewegung nicht hindert, jedoch deren axiale Bewegung verzögert. Wird der Filtereinrichtung weiter angeschraubt, so erfolgt eine Stauchung des Federelementes wodurch eine Axialverstellung des Verschlusselementes hin zum Leerlaufkanal verzögert wird, bis die Lücken zwischen den Rippen die Rampen aufnehmen und die Lücken zwischen den Rampen die Rippen, so dass das Verschlusselement auf einer Mündung des Leerlaufkanals aufliegt, und zwar so, dass der Leerlaufkanal dicht verschlossen ist.

Bei der Erfindung ist das Zwischenstück aus einer Verschlusseinrichtung in der Art einer Platte und einer äußeren Kappe ausgebildet, wobei auf dem äußeren Rand der Verschlusseinrichtung mindestens ein Rastelement vorgesehen ist, das in ein passendes Gegenrastelement auf der Innenseite der Kappe eingreift und somit nur das Drehen in eine Richtung erlaubt. Die Kappe ist fest mit dem Filtergehäusedeckel verbunden und die Verschlusseinrichtung darin drehbar.

Bei der Erfindung ist zwischen dem Zwischenstück und dem darüber angeordneten Ringfilterelement ein scheibenartiger Boden und ein einfaches Federelement vorgesehen, wobei der Boden mehrere in Umfangsrichtung verteilte Durchgangsöffnungen aufweist. Das Mitdrehen der Verschlusseinrichtung beim Abschrauben des Filtergehäusedeckels vom Gehäuse bewirkt ein Anheben des Verschlusselementes und damit eine Axialverstellung der Verschlusseinrichtung samt Verschlusselement, so dass das Verschlusselement die Mündung des Leerlaufkanals freigibt. Die Verschlusseinrichtung verhält sich somit beim Anschraubvorgang bzw. Abschraubvorgang der Filtereinrichtung am/vom Gehäuse komplett anders.

Beim Anschrauben der Filtereinrichtung am Gehäuse wird dabei die Verschlusseinrichtung, das heißt die zwischen Verschlusseinrichtung und Boden angeordnete Feder gestaucht, bis das an der Verschlusseinrichtung angeordnete Verschlusselement dicht auf dem Leerlaufkanal anliegt. Dadurch kann beim Anschrauben der Filtereinrichtung am Gehäuse ein zuverlässiges Verschließen des Leerlaufkanals und beim Abschrauben der Filtereinrichtung vom Gehäuse ein zuverlässiges Öffnen und damit Leerlauf des Aufnahmeraums bewirkt werden. Dies gewährleistet zum einen eine hohe Funktionssicherheit der Filtereinrichtung und zum anderen kann ein Austritt von Filterflüssigkeit in die Umgebung zuverlässig vermieden werden, da der Leerlaufkanal vorzugsweise bereits bei wenigen Umdrehungen der Filtereinrichtung vollständig geöffnet wird, so dass der Aufnahmeraum vollständig leer laufen kann, bevor der Filtereinrichtung abgenommen ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
Fig. 1 zeigt eine Außenansicht der erfindungsgemäßen Filtereinrichtung
Fig. 2 zeigt ein Detail der Außenansicht
Fig. 3 zeigt das Detail als Explosionsdarstellung
Fig. 4 zeigt ein Detail in der Draufsicht von unten
Fig. 5 zeigt ein Bestandteil einer Verschlusseinrichtung der Filtereinrichtung
Fig. 6 zeigt die Details aus Fig. 3
Fig. 7 zeigt ein Gehäuse der Filtereinrichtung in Schrägansicht
Fig. 8 zeigt das Gehäuse aus Fig. 7 geschnitten
Fig. 9 zeigt eine erste Stufe des Zusammenspiels der Rampen beim Anschrauben
Fig. 10 zeigt eine zweite Stufe des Zusammenspiels der Rampen beim Anschrauben
Fig. 11 zeigt die montierte Filtereinrichtung
Fig. 12 zeigt ein Detail aus Fig. 11

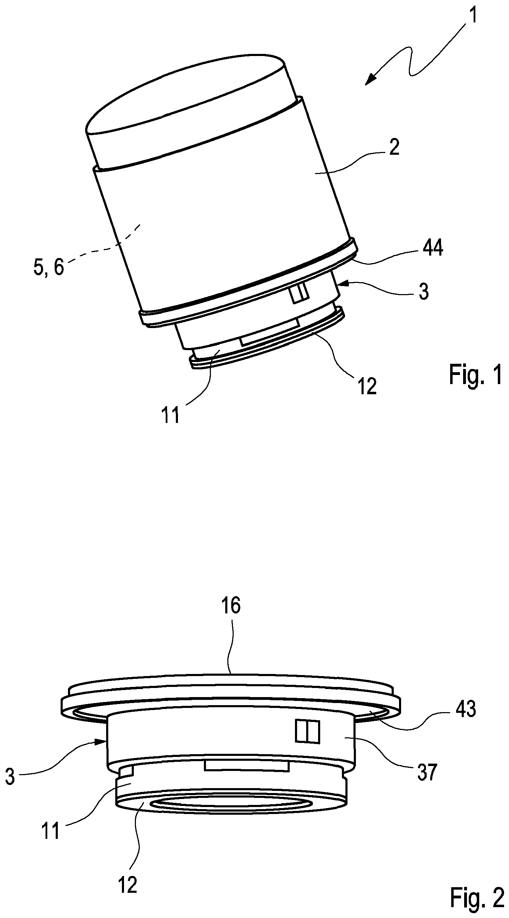

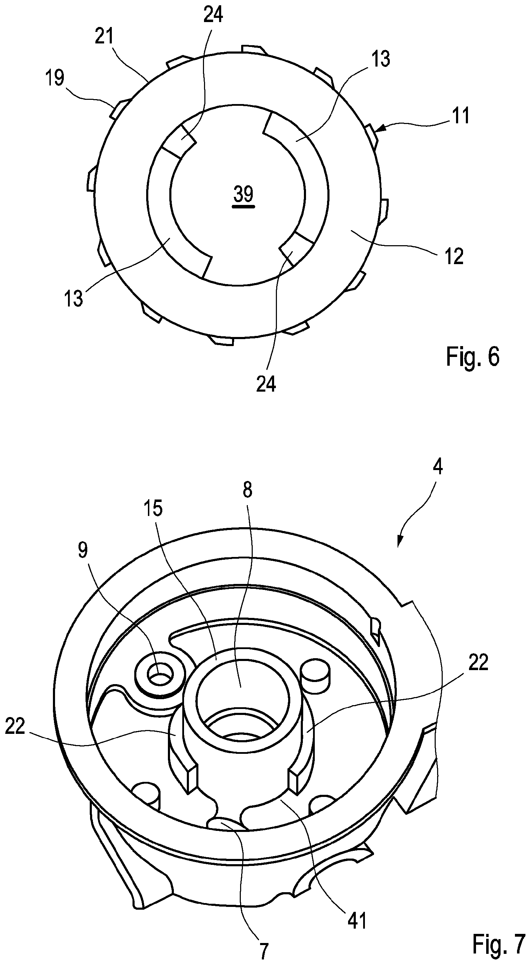

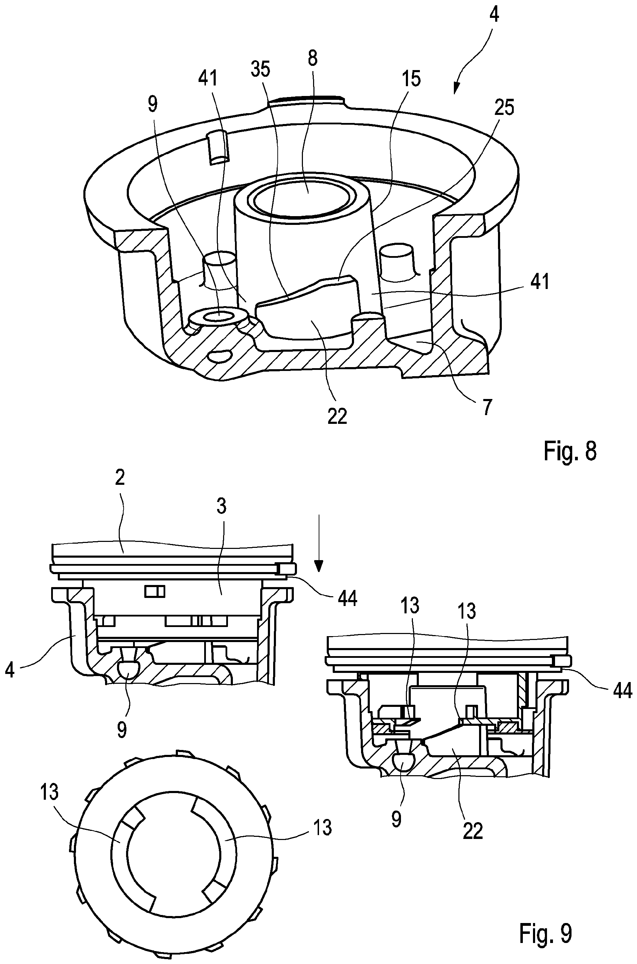

In Fig. 1 ist die Filtereinrichtung 1 von außen zusehen. Sie besteht aus einem Filtergehäusedeckel 2, dieser bildet in seinem Inneren einen Aufnahmeraum 5 in dem das Ringfilterelement 6 so angeordnet ist, dass es eine Reinseite von einer Rohseite trennt. Der innere Aufbau ist der eines üblicherweise verwendeten Wechselfilters der zur Filtrierung von Öl geeignet ist. An der dem Gehäuse 4 zugewandten Seite der Filtereinrichtung 1 befindet sich ein Zwischenstück 3. Das Gehäuse 4, an dem die Filtereinrichtung 1 festgeschraubt wird, kann beispielsweise ein Motorblockgehäuse oder ein Zylindergehäuse sein. Der Einfachheit halber wird nur von Gehäuse 4 gesprochen. Das Gehäuse 4 ist so gestaltet, dass es einen Dom 15 mit Gewinde, an den Dom 15 angrenzend eine Rampe 22, sowie den Einlasskanal 7, den Auslasskanal 8 und den Leerlaufkanal 9 aufweist (siehe Fig. 7 und 8).

In der Fig. 2 ist das Zwischenstück 3 gezeigt, das mit dem Filtergehäusedeckel 2 an dem Übergang der beiden Teile dicht verbördelt ist. Das Zwischenstück 3 besteht aus einer äußeren Kappe 37 und einer innenliegenden Platte 11.

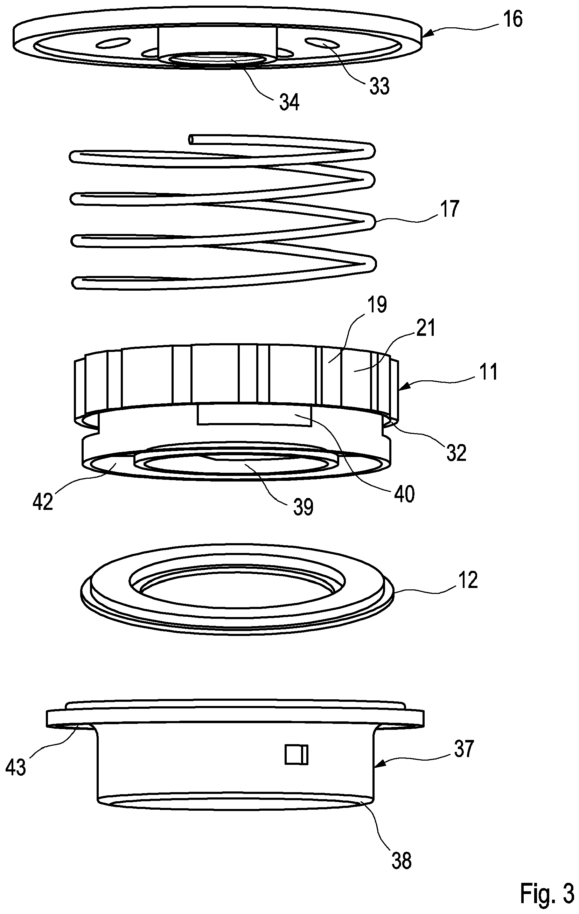

In der Fig. 3 sind die einzelnen Teile, die zusammen das Zwischenstück 3 bilden und weitere Teile dargestellt. Den Abschluss des Aufnahmeraumes 5 bildet ein Boden 16, der Durchgangsöffnungen 33 aufweist durch die Öl in den Aufnahmeraum 5 gelangen kann. Die zentrale Öffnung 34 weist ein Gewinde oder einen Gewindehohlbolzen auf damit die Filtereinrichtung 1 an dem Dom 15 des Gehäuses 4 festgeschraubt werden kann. Zwischen Boden 16 und Platte 11 befindet sich ein Federelement 17, in dem gezeigten Beispiel eine gewöhnliche Spiralfeder, es kann aber jedes geeignete Federelement 17 verwendet werden. Das Federelement 17 hat an der Platte 11 innen eine Auflagefläche. Die Platte 11 weist eine zentrale Öffnung 39 und einen seitlichen Rand 21 auf, an dem sich Rastelemente 19 befinden. Der untere Rand 32 der Rastelemente 19 bildet gleichzeitig die Halterung der Platte 11 in der Kappe 37. Die Kappe 37 hat zu diesem Zweck am unteren Ende einen umgebogenen Rand 38. Die Platte 11 weist auch an der dem Gehäuse zugewandten Seite eine flache Ringnut auf, in die das Verschlusselement 12 in Form einer flachen O-Ring Dichtung eingelegt ist. Die Dichtmasse kann auch in die Ringnut eingespritzt sein. Die genaue Form des Verschlusselementes 12 ist vom jeweiligen Anwendungsfall abhängig.

Alle genannten Teile der Filtereinrichtung 1, bis auf das Ringfilterelement 6 und die Dichtungen, können aus Metall oder auch aus geeigneten Kunststoffen hergestellt sein, in letzterem Fall wäre dann allerdings die Kappe 37 mit dem Filtergehäusedeckel 2 nicht verbördelt, sondern verschweißt.

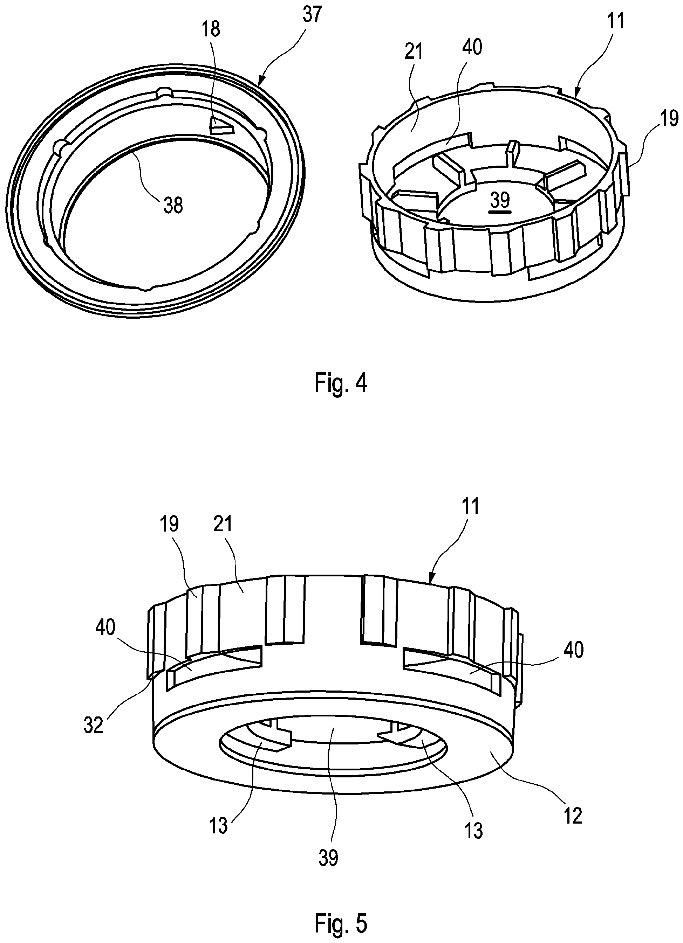

Im Detail sind die Kappe 37 und die Platte 11 nochmals in der Fig. 4 dargestellt. In der Kappe 37 befindet sich mindestens eine Rastnase 18 an der die Rasthaken 19 des seitlichen Randes 21 der Platte 11 eingreifen. Dadurch ist die Platte 11 nur in eine Richtung in der Kappe 37 drehbar. In der anderen Richtung wird sie durch das Ineinandergreifen der Rastelemente 18 und 19 mit der Kappe 37 und damit mit der Filtereinrichtung 1 mitbewegt.

Auch Fig. 5 zeigt die Platte 11 im Detail allerdings aus einer anderen Perspektive. Zu sehen ist hier, dass die Rippen 13 versetzt zum Verschlusselement 12 angeordnet sind und dass unterhalb der Rasthaken 19 längliche Öffnungen 40 vorgesehen sind, durch die das Öl aus dem Aufnahmeraum 5 über den Leerlaufkanal beim Abschrauben der Filtereinrichtung 1 ablaufen kann.

In der Fig. 6 ist eine Ansicht der Platte 11 von unten dargestellt. Man erkennt die auf dem seitlichen Rand 21 befindlichen Rastelemente 19, die am gesamten Umfang des seitlichen Randes 21 der Platte 11 vorkommen. An der zentralen Öffnung 39 sind auf der Innenseite mindestens zwei Rippen 13 angeordnet. Rippen deshalb, weil sie nur an einem Ende 24 eine kurze nicht zu steile Steigung aufweisen, während der Rest der Rippen 13 flach verläuft. Wie aus Fig. 5 zu entnehmen ist sind die Rippen 13 nicht auf der Höhe des Verschlusselementes 12 angeordnet, sondern liegen etwas versetzt hierzu. Zwischen den mindestens zwei Rippen 13 befinden sich mindestens zwei Lücken, die Enden der jeweiligen Rippen 13 sind beabstandet zu einander.

In der Fig. 7 ist eine Schrägaufsicht auf das Gehäuse 4 zu sehen. Man erkennt den Einlasskanal 7, den Auslasskanal 8 und die Leerlauföffnung 9, sowie mindestens zwei Rampen 22, die passend zu den Rippen 13 an der Platte 11 gestaltet sind, also gegengleich.

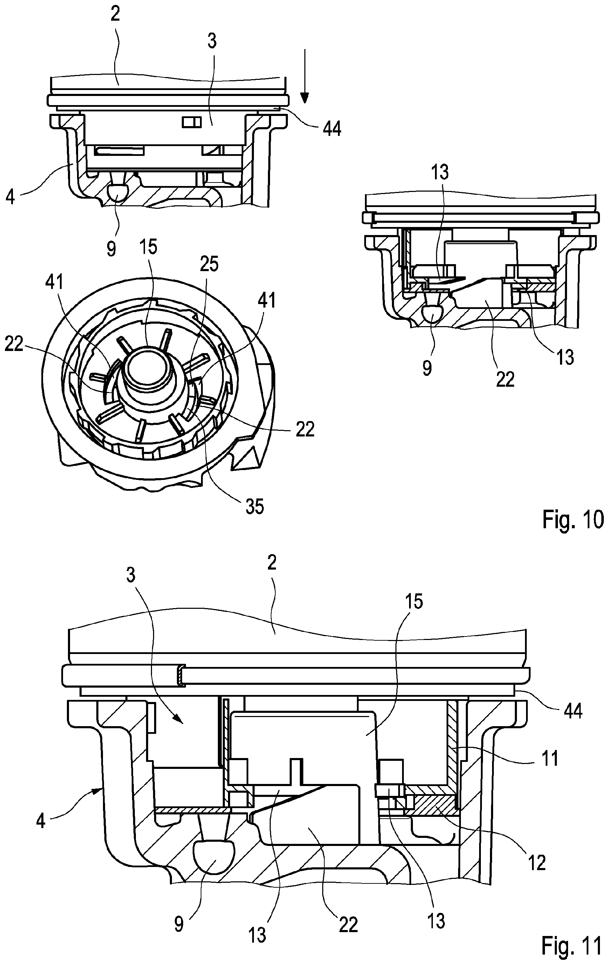

In der Fig. 8 ist das Gehäuse 4 geschnitten dargestellt. Am Dom 15 angrenzend befindet sich die Rampe 22. Sie hat einen ersten Teil 35 mit einer geringen Steigung und einen zweiten Teil 25 der ohne Steigung ist. Zwischen den mindestens zwei Rampen 22 befindet sich mindestens zwei Lücken 41 in die bei angeschraubter Filtereinrichtung 1 die Rippen 13 der Platte 11 zum liegen kommen. Die Geometrie der Rippen 13 und Rampen 22 sowie der jeweils zwischen zwei Rampen liegenden Lücken, muss ideal aufeinander abgestimmt sein. Dies ist in den Fig. 9 und 10 veranschaulicht. Beim Festschrauben der Filtereinrichtung 1 am Gehäuse 4 greift zunächst das Gewinde des Bodens 16 oder eines Gewindehohlboizens in das Gewinde des Doms 15 ein. Durch das Drehen der Filtereinrichtung 1 wird die Platte 11 mit der Filtereinrichtung 1 zusammen in Richtung des Gehäuses 4 also axial bewegt. Wenn das flache Stück der Rippen 13 auf dem Teil 25 der Rampe 22 aufsetzt wird das Federelement 17 gestaucht. Beim weiteren Drehen der Filtereinrichtung 1 gleiten die Rippen 13 und Rampen 22 an einander entlang, bis die Rippen 13 in die Lücken 41 zwischen den Rampen 22 einfahren können. In diesem Stadium kann die Platte 11 weiter rotieren ohne sich axial zu bewegen, erst wenn die Rippen 13 in die Lücken 41 eingreifen, kann die Platte nicht weiter rotieren, daran wir sie durch die Rampen 22 gehindert. Es wirkt nun die Federkraft des Federelementes 17 und drückt die Platte 11 nach unten in Richtung des Gehäuses 4. Die Filtereinrichtung 1 wird nun durch weiteres Drehen festgeschraubt und ist nun dicht auf dem Gehäuse 4 angeschraubt. Die Federkraft des Federelementes 17 bewirkt ein dichtes Verschließen der Leerlauföffnung des Leerlaufkanals 9.

Beim Abschrauben der Filtereinrichtung 1 vom Gehäuse 4 wird die Platte 11 zwangsläufig mit der Filtereinrichtung 1 mitbewegt aufgrund der als Sperrhaken wirkenden Rastelemente 18 und 19 die an der Platte 11 und an der Kappe 37 angeordnet sind (siehe Fig. 4).

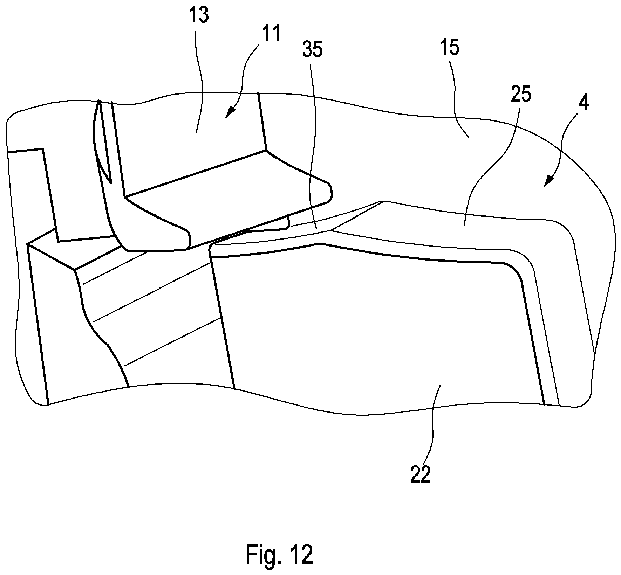

In den Fig. 11 und 12 ist die Funktionsweise der Rippen 13 und der Rampen 22 beim Abschrauben der Filtereinrichtung 1 dargestellt, es wird in die andere Richtung z.B. gegen den Uhrzeigersinn gedreht. Durch das Drehen der Filtereinrichtung 1 bewegen sich die Rippen 13 aus den Lücken 41 auf die Rampe 22 zu bis die beiden schrägen Flächen der Rippen 13 und der Rampen 22 in Kontakt kommen. Die Platte gleitet mittels des schrägen Teiles der Rippen 13 an der Rampe 22 im Gehäuse 4 entlang, dadurch wird der Platte 11 gegen das Federelement 17 gedrückt, dieses wird wieder gestaucht und die Leerlauföffnung des Leerlaufkanals 9 wird freigegeben, so dass das Öl aus dem Aufnahmeraum 5 der Filtereinrichtung 1 über den Leerlaufkanal 9 abfließen kann bevor die Filtereinrichtung 1 vom Gehäuse losgeschraubt ist.

Fig. 12 zeigt wie die beiden schrägen Flächen der Rippen 13 einerseits und der Rampe 22 andererseits übereinander gleiten. Bei den Bewegungen der Rippen 13 und der Rampen 22 relativ zueinander entstehen keine Materialkrümel, da beide Flächen aufweisen, die keine scharfen Kanten haben.

An der Kappe 37 befindet sich am Außenumfang nahe der Verbindungsstelle zwischen Filtergehäusedeckel 2 und Kappe 37 eine weitere nicht gezeigt Dichtung, die die Filtereinrichtung 1 nach dem Anschrauben gegenüber dem Gehäuse 4 abdichtet, so dass während des Betriebes kein Öl in die Umgebung gelangen kann.

## Patentansprüche

1. Filtereinrichtung (1), insbesondere ein Ölfilter zum Reinigen von Schmieröl für Verbrennungsmotoren von Kraftfahrzeugen,
- mit einem, einen Aufnahmeraum (5) begrenzenden Filtergehäusedeckel (2), in dem ein Ringfilterelement (6) angeordnet ist,
- mit einem Gehäuse (4), in welchem mittig ein Dom (15) angeordnet ist und auf welches der Filtergehäusedeckel (2) aufgeschraubt wird,
- mit wenigstens einem Zwischenstück (3), welches bei am Gehäuse (4) angeschraubtem Filtergehäusedeckel (2) zwischen Filtergehäusedeckel (2) und Gehäuse (4) angeordnet ist,
- mit einem gehäuseseitigen Einlasskanal (7), der mit einer Rohseite des Ringfilterelementes (6) kommuniziert, und einem gehäuseseitigen Auslasskanal (8), der mit einer Reinseite des Ringfilterelementes (6) kommuniziert,
- mit einem gehäuseseitigen Leerlaufkanal (9), durch den der Aufnahmeraum (5) beim Entfernen des Filtergehäusedeckels (2) entleerbar ist,
- wobei das Zwischenstück (3) eine Kappe (37) und eine separate Verschlusseinrichtung aufweist, die als Platte (11) ausgestaltet ist,
- wobei die Kappe (37) fest mit dem Filtergehäusedeckel (2) verbunden ist,
- wobei die Platte (11) in der Kappe (37) drehbar um die Filterachse (10) angeordnet ist und ein Verschlusselement (12) aufweist, mit welchem der Leerlaufkanal (9) verschließbar ist,
- wobei auf einem äußeren Rand (21) der Platte (11) mindestens ein Rastelement (19) vorgesehen ist, das in ein passendes Gegenrastelement (18) auf der Innenseite der Kappe (37) eingreift,
- wobei zwischen dem Zwischenstück (3) und dem Ringfilterelement (6) ein scheibenartiger Boden (16) vorgesehen ist, welcher mehrere in Umfangsrichtung verteilte Durchgangsöffnungen (33) aufweist,
- wobei die Verschlusseinrichtung ein Federelement (17) aufweist, das zwischen der Platte (11) und dem scheibenartigen Boden (16) angeordnet ist, und das bewirkt, dass das Verschlusselement (12) auf die Leerlauföffnung (9) gedrückt wird,
- wobei die Verschlusseinrichtung so ausgebildet ist, dass sie beim Anschrauben des Filtergehäusedeckels (2) am Gehäuse (4) in einer genau definierten Lage fixiert ist, in welcher das Verschlusselement (12) fluchtend zum Leerlaufkanal (9) angeordnet und durch das Anschrauben des Filtergehäusedeckels (2) in eine den Leerlaufkanal (9) verschließende Stellung verstellbar ist, während die Verschlusseinrichtung beim Abschrauben des Filtergehäusedeckels (2) verdreht und gleichzeitig axial von dem Gehäuse (4) wegbewegt wird, so dass das Verschlusselement (12) den Leerlaufkanal (9) freigibt,
**dadurch gekennzeichnet,**
- **dass** die Verschlusseinrichtung mindestens zwei dem zum Gehäuse (4) gehörenden Dom (15) zugewandte Rippen (13) aufweist, die mit mindestens zwei gehäuseseitigen Rampen (22) zusammenwirken,
- **dass** das mindestens eine Rastelement (19) der Platte so in das jeweilige Gegenrastelement (18) der Kappe (37) eingreift, dass die Verschlusseinrichtung an der Kappe (37) nur in einer Richtung drehbar ist.

2. Filtereinrichtung nach Anspruch 1,
**dadurch gekennzeichnet,**
**dass** die Verschlusseinrichtung beim Anschrauben des Filtergehäusedeckels (2) am Gehäuse (4) mit ihren Rippen (13) an den gehäuseseitigen Rampen (22) angreift und dadurch bezüglich ihrer Lage so fixiert ist, dass das Verschlusselement (12) zum Leerlaufkanal (9) fluchtet und durch ein weiteres Anschrauben des Filtergehäusedeckels (2) in seine den Leerlaufkanal (9) verschließende Stellung verstellbar ist.

3. Filtereinrichtung nach einem der vorhergehenden Ansprüche,
**dadurch gekennzeichnet,**
**dass** die Drehbewegung der Verschlusseinrichtung durch ein Gleiten der Rippen (13) entlang der gehäuseseitigen Rampen (22) eine Axialverstellung der Verschlusseinrichtung und damit ein Öffnen des Leerlaufkanals (9) bewirkt.

4. Filtereinrichtung nach einem der vorhergehenden Ansprüche,
**dadurch gekennzeichnet,**
**dass** die Platte (11) aus Kunststoff oder aus Metall, insbesondere aus Blech, ausgebildet ist.

5. Filtereinrichtung nach einem der vorhergehenden Ansprüche,
**dadurch gekennzeichnet,**
**dass** das Verschlusselement (12) aus schmierölbeständigem Kunststoff ausgebildet ist.

6. Filtereinrichtung nach einem der vorhergehenden Ansprüche,
**dadurch gekennzeichnet,**
**dass** die Platte (11) eine in Axialrichtung offene Ringnut (42) aufweist, in welcher das Verschlusselement (12) angeordnet ist.

7. Filtereinrichtung nach einem der vorhergehenden Ansprüche,
**dadurch gekennzeichnet,**
**dass** das Zwischenstück (3) eine in Axialrichtung offene Ringnut (43) aufweist, in welcher ein Dichtelement (44) angeordnet ist, welches das Zwischenstück (3) gegenüber dem Gehäuse (4) abdichtet.

## Claims

1. Filter device (1), in particular an oil filter for cleaning lubricating oil for the internal combustion engines of motor vehicles,
- with a filter housing cover (2) delimiting a receiving chamber (5), in which filter housing cover a ring filter element (6) is arranged,
- with a housing (4), in which a mandrel (15) is arranged centrally and onto which the filter housing cover (2) is screwed,
- with at least one intermediate piece (3), which with the filter housing cover (2) screwed onto the housing (4), is arranged between the filter housing cover (2) and housing (4),
- with a housing-side inlet channel (7), which communicates with a dirty side of the ring filter element (6), and a housing-side outlet channel (8), which communicates with a clean side of the ring filter element (6),
- with a housing-side idling channel (9), through which the receiving chamber (5) can be emptied on removing the filter housing cover (2),
- wherein the intermediate piece (3) comprises a cap (37) and a separate closure device which is in the form of a plate (11),
- wherein the cap (37) is securely connected to the filter housing cover (2),
- wherein the plate (11) is arranged in the cap (37) rotatably about the filter axis (10) and comprises a closure element (12) by means of which the idling channel (9) can be closed,
- wherein on an outer edge (21) of the plate (11) at least one locking element (19) is provided which engages into a fitting counter locking element (18) on the inner side of the cap (37),
- wherein between the intermediate piece (3) and the ring filter element (6) a disc-like base (16) is provided, which comprises a plurality of through openings (33) distributed in circumferential direction,
- wherein the closure device comprises a spring element (17) which is arranged between the plate (11) and the disc-like base (16), and which causes the closure element (12) to be pushed onto the idling opening (9),
- wherein the closure device is designed so that when screwing the filter housing cover (2) onto the housing (4) it is fixed in a precisely defined position, in which the closure element (12) is aligned flush with the idling channel (9) and by screwing on the filter housing cover (2) can be adjusted into a position closing the idling channel (9), whereas the closure device rotates when unscrewing the filter housing cover (2) and at the same time is moved away axially from the housing (4) so that the closure element (12) releases the idling channel (9),
**characterised in that**
- the closure device comprises at least two ribs (13) facing towards the mandrel (15) belonging to the housing (4), which ribs cooperate with at least two housing-side ramps (22),
- **in that** the at least one locking element (19) of the plate engages into the respective counter locking element (18) of the cap (37), so that the closure device on the cap (37) can only be rotated in one direction.

2. Filter device according to claim 1,
**characterised in that**
the closure device when screwing the filter housing cover (2) onto the housing (4) engages with its ribs (13) on the housing-side ramps (22) and is thereby fixed relative to their position that the closure element (12) is aligned with the idling channel (9) and can be adjusted by means of additionally screwing on the filter housing cover (2) into its position closing the idling channel (9).

3. Filter device according to any one of the preceding claims,
**characterised in that**
the rotational movement of the closure device by sliding the ribs (13) along the housing-side ramps (22) causes an axial adjustment of the closure device and thus the opening of the idling channel (9).

4. Filter device according to any one of the preceding claims,
**characterised in that**
the plate (11) is made of plastic or metal, in particular sheet metal.

5. Filter device according to any one of the preceding claims,
**characterised in that**
the closure element (12) is made from a lubricating oil-resistant plastic material.

6. Filter device according to any one of the preceding claims,
**characterised in that**
the plate (11) comprises an annular groove (42) which is open in axial direction in which the closure element (12) is arranged.

7. Filter device according to any one of the preceding claims,
**characterised in that**
the intermediate piece (3) comprises an annular groove (43) open in axial direction, in which a sealing element (44) is arranged which seals the intermediate piece (3) from the housing (4).

## Revendications

1. Dispositif de filtration (1), en particulier un filtre à huile servant à nettoyer de l'huile de lubrification pour des moteurs à combustion interne de véhicules automobiles,
- avec un couvercle de boîtier de filtre (2) délimitant un espace de réception (5), dans lequel un élément filtrant annulaire (6) est disposé,
- avec un boîtier (4), dans lequel un dôme (15) est disposé au centre et sur lequel le couvercle de boîtier de filtre (2) est vissé,
- avec au moins une pièce intermédiaire (3), qui est disposée à proximité du couvercle de boîtier de filtre (2) vissé au niveau du boîtier (4), entre le couvercle de boîtier de filtre (2) et le boîtier (4),
- avec un canal d'admission (7) situé côté boîtier, qui communique avec un côté brut de l'élément filtrant annulaire (6), et un canal d'évacuation (8) situé côté boîtier, qui communique avec un côté propre de l'élément filtrant annulaire (6),
- avec un canal de vidange (9) situé côté boîtier, par lequel l'espace de réception (5) peut être vidé lors du retrait du couvercle de boîtier de filtre (2),
- dans lequel la pièce intermédiaire (3) présente un capot (37) et un dispositif de fermeture séparé, qui est configuré sous la forme d'une plaque (11),
- dans lequel le capot (37) est relié de manière solidaire au couvercle de boîtier de filtre (2),
- dans lequel la plaque (11) est disposée dans le capot (37) de manière à pouvoir tourner autour de l'axe de filtre (10) et présente un élément de fermeture (12), avec lequel le canal de vidange (9) peut être fermé,
- dans lequel au moins un élément d'enclenchement (19) est prévu sur un bord (21) extérieur de la plaque (11), lequel élément d'enclenchement vient en prise avec un contre-élément d'enclenchement (18) adapté sur le côté intérieur du capot (37),
- dans lequel est prévu, entre la pièce intermédiaire (3) et l'élément filtrant annulaire (6), un fond (16) de type disque, qui présente plusieurs ouvertures de passage (33) réparties dans la direction périphérique,
- dans lequel le dispositif de fermeture présente un élément de ressort (17), qui est disposé entre la plaque (11) et le fond (16) de type disque et qui a pour effet que l'élément de fermeture (12) est poussé sur l'ouverture de vidange (9),
- dans lequel le dispositif de fermeture est réalisé de telle sorte qu'il est fixé, lors du vissage du couvercle de boîtier de filtre (2) au niveau du boîtier (4), dans une position précisément définie, dans laquelle l'élément de fermeture (12) est disposé de manière alignée par rapport au canal de vidange (9) et peut être ajusté, par le vissage du couvercle de boîtier de filtre (2), dans une position fermant le canal de vidange (9), tandis que le dispositif de fermeture est tourné lors du dévissage du couvercle de boîtier de filtre (2) et est déplacé simultanément axialement de manière à s'éloigner du boîtier (4) de sorte que l'élément de fermeture (12) dégage le canal de vidange (9),
**caractérisé en ce**
- **que** le dispositif de fermeture présente au moins deux nervures (13) tournées vers le dôme (15) faisant partie du boîtier (4), lesquelles coopèrent avec au moins deux rampes (22) situées côté boîtier,
- **que** l'au moins un élément d'enclenchement (19) de la plaque vient en prise de telle sorte avec le contre-élément d'enclenchement (18) respectif du capot (37) que le dispositif de fermeture peut être tourné au niveau du capot (37) seulement dans une direction.

2. Dispositif de filtration selon la revendication 1,
**caractérisé en ce**
**que** le dispositif de fermeture s'engage, lors du vissage du couvercle de boîtier de filtre (2) au niveau du boîtier (4), par ses nervures (13), au niveau des rampes (22) situées côté boîtier et est fixé ainsi concernant sa position de telle sorte que l'élément de fermeture (12) est aligné par rapport au canal de vidange (9) et peut être ajusté par un vissage ultérieur du couvercle de boîtier de filtre (2) dans sa position fermant le canal de vidange (9).

3. Dispositif de filtration selon l'une quelconque des revendications précédentes,
**caractérisé en ce**
**que** le déplacement de rotation du dispositif de fermeture a pour effet, du fait d'un coulissement des nervures (13) le long des rampes (22) situées côté boîtier, un ajustement axial du dispositif de fermeture et, ainsi, une ouverture du canal de vidange (9).

4. Dispositif de filtration selon l'une quelconque des revendications précédentes,
**caractérisé en ce**
**que** la plaque (11) est réalisée à partir de matière plastique ou de métal, en particulier de tôle.

5. Dispositif de filtration selon l'une quelconque des revendications précédentes,
**caractérisé en ce**
**que** l'élément de fermeture (12) est réalisé à partir d'une matière plastique résistante à l'huile de lubrification.

6. Dispositif de filtration selon l'une quelconque des revendications précédentes,
**caractérisé en ce**
**que** la plaque (11) présente une rainure annulaire (42) ouverte dans la direction axiale, dans laquelle l'élément de fermeture (12) est disposé.

7. Dispositif de filtration selon l'une quelconque des revendications précédentes,
**caractérisé en ce**
**que** la pièce intermédiaire (3) présente une rainure annulaire (43) ouverte dans la direction axiale, dans laquelle est disposé un élément d'étanchéité (44), qui étanchéifie par rapport au boîtier (4) la pièce intermédiaire (3).
